# EUROPEAN PATENT APPLICATION

(11) **EP 2 230 610 A1**
(43) Date of publication of application: **22.09.2010**
(21) Application number: 09163942.7
(22) Date of filing: 26.06.2009
(51) Int. Cl.: G06F 17/30

(54) **Method, system and apparatus for managing media files**

(30) Priority: 20.03.2009 US 162042 P
(71) Applicant: RESEARCH IN MOTION LIMITED, Waterloo, Ontario N2L 3W8 (CA)
(72) Inventor: Chan, Edward, Waterloo Ontario N2V 1K8 (CA); Coman, Tudor, Waterloo Ontario N2V 1K8 (CA)
(74) Representative: MERH-IP Matias Erny Reichl Hoffmann

(57) **Abstract**

According to embodiments described in the specification, a method, system and apparatus are provided for managing media files on a mobile electronic device comprising a processor, a display, a memory and an input device. The method comprises storing in the memory a plurality of device library elements each associated with one of a plurality of corresponding media files, and storing in the memory a subset of the corresponding media files; storing in the memory a first menu list including and a second menu list; receiving a selection of one of the library elements; determining if the media file corresponding to the selected library element is stored in the memory; if the file is stored in the memory, selecting the first menu list; if the file is not stored in the memory, selecting the second menu list; and controlling the display to generate representative data for the selected menu list.

## Description

### CROSS REFERENCE TO RELATED APPLICATION

The present specification claims priority from U.S. Provisional Patent Application No. 61/162,042, filed March 20, 2009, the contents of which are incorporated herein by reference.

### FIELD

The specification relates generally to media file management, and specifically to a method, system and apparatus for managing media files.

### BACKGROUND

Mobile electronic devices, such as personal digital assistants ("PDAs") and cell phones, are increasingly being used as multimedia players. As such, media files, including songs, podcasts and videos, are being stored on these mobile electronic devices. In some cases, the media files are a portion of a larger collection of media files stored on a personal computer. Managing these media files is becoming increasingly complex with the mobility and connectivity of mobile electronic devices, and can result in unnecessary consumption of valuable device resources.

### BRIEF DESCRIPTIONS OF THE DRAWINGS

Embodiments are described with reference to the following figures, in which:

Fig. 1 depicts a system for managing media files, according to a non-limiting embodiment;

Fig. 2 depicts a remote media library stored at the remote computing device of the system of Fig. 1, according to a non-limiting embodiment;

Fig. 3 depicts a device media library stored at the mobile electronic device of the system of Fig. 1, according to a non-limiting embodiment;

Fig. 4 depicts first and second menu lists stored at the mobile electronic device of Fig. 1, according to a non-limiting embodiment;

Fig. 5 depicts processing operations for controlling a display of the mobile electronic device of Fig. 1, according to a non-limiting embodiment;

Fig. 6 depicts a method for managing media files, according to a non-limiting embodiment; and

Fig. 7 depicts a continuation of the method of Figure 6, according to a non-limiting embodiment.

### DETAILED DESCRIPTION OF THE EMBODIMENTS

According to an aspect of the specification, a method for managing media files on a mobile electronic device is provided. The mobile electronic device comprises a processor, a display, a memory and an input device. The method comprises: storing in the memory a plurality of device library elements each associated with one of a plurality of corresponding media files, and storing in the memory a subset of the corresponding media files; storing in the memory a first menu list and a second menu list; receiving a selection of one of the library elements; determining if the media file corresponding to the selected library element is stored in the memory; if the corresponding file is stored in the memory, selecting the first menu list; if the corresponding file is not stored in the memory, selecting the second menu list; and controlling the display to generate representative data for the selected menu list.

According to a further aspect of the specification, a computer readable storage medium is provided comprising programming instructions embodying the method.

According to another aspect of the specification, a mobile electronic device is provided, comprising: a display; a memory storing a plurality of device library elements each associated with one of a plurality of corresponding media files; the memory further storing a subset of the corresponding media files; the memory further storing first and second menu lists; an input device for receiving input data selecting one of the library elements; a processor, interconnected with the display, memory and input device, configured to determine if the media file corresponding to the selected library element is stored in the memory; the processor further configured, if the corresponding file is stored in the memory, to select the first menu list; the processor further configured, if the corresponding file is not stored in the memory, to select the second menu list; the processor further configured to control the display to generate representative data for the selected menu list.

According to a still further aspect of the specification, a system is provided for managing media files. The system comprises a remote computing device and the above mobile electronic device. The remote computing device comprises a memory storing a plurality of media files; a processor; and, a communications interface.

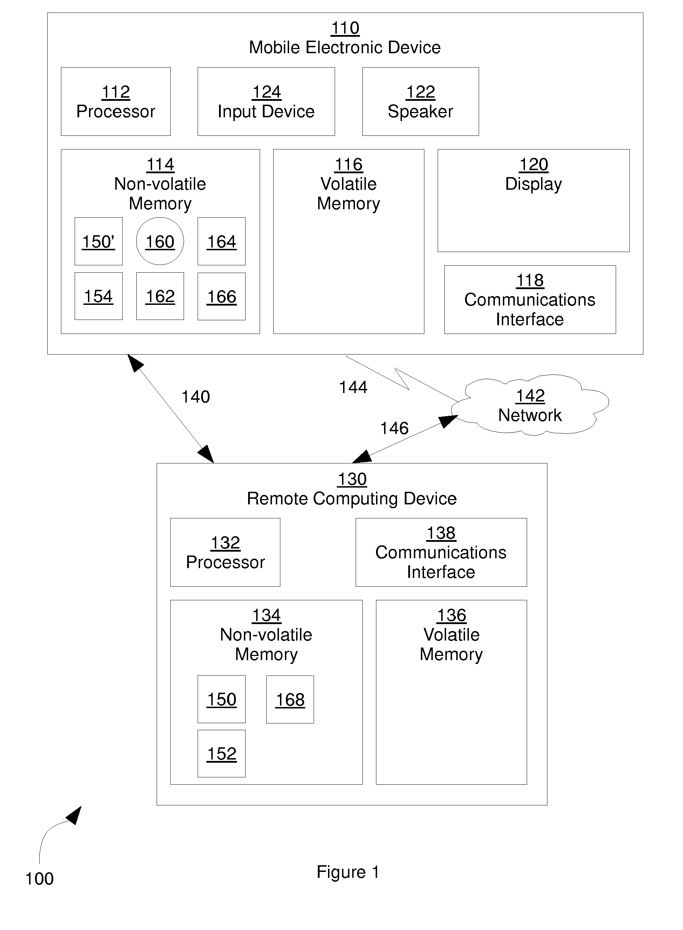

Figure 1 depicts a system 100 for managing media files and including a mobile electronic device 110. In the present embodiment, mobile electronic device 110 is based on the computing environment and functionality of a hand-held wireless communication device. It will be understood, however, that mobile electronic device 110 is not limited to a hand-held wireless communication device. Other electronic devices are possible, such as cellular/mobile telephones, smart telephones, PDAs, media or MP3 players, and laptop computers. Mobile electronic device 110 includes a processor 112, a non-volatile memory 114 (e.g. read only memory ("ROM"), Electrically Erasable Programmable Read Only Memory ("EEPROM"), flash memory, magnetic computer storage device, or optical disc), and a volatile memory 116 (e.g. Random Access Memory ("RAM")). Mobile electronic device 110 also includes a communications interface 118, and one or more output devices such as a display 120 and a speaker 122. Mobile electronic device 110 further includes an input device 124. In general, input device 124 is configured to receive input data, and can comprise any suitable combination of input devices, such as a keypad, a touch screen integrated with display 120, a scroll wheel and the like. The various components of mobile electronic device 110 are interconnected, for example via a communication bus (not shown).

System 100 also includes a remote computing device 130. It will be understood that the term "remote" as used herein indicates that remote computing device 130 is a separate physical device, and can therefore be at a different location than the usual location of mobile electronic device 110. Remote computing device 130 may be a personal computer, media server or the like, and includes a processor 132, a non-volatile memory 134 (e.g. read only memory ("ROM"), Electrically Erasable Programmable Read Only Memory ("EEPROM"), flash memory, magnetic computer storage device, or optical disc), a volatile memory 136 (e.g. Random Access Memory ("RAM")), and a communications interface 138. It will now be apparent that remote computing device 130 can also comprise one or more output devices and one or more input devices. The various components of remote computing device 130 are interconnected, for example via a communication bus (not shown).

Communications interfaces 118 and 138 are configured to provide communication capabilities to mobile electronic device 110 and remote computing device 130, respectively. Mobile electronic device 110 and remote computing device 130 can thus communicate via a local wired or wireless link 140 (e.g. Universal Serial Bus ("USB")). Mobile electronic device 110 and remote computing device 130 can also communicate via a network 142 by way of links 144 and 146, which may be wired or wireless as desired. Links 144 and 146 are therefore compatible with network 142, and can include packet based protocols, Internet protocols, analog protocols, PSTN protocols, cell phone protocols (1X, UTMS, CDMA, GSM, and the like), WiFi protocols, WiMax protocols and/or any suitable combination thereof. Other suitable protocols will also occur to those skilled in the art. The link 140 and combination of links 144, 146 are independent of each other and user configurable and thus one, both, or neither may exist at a given time.

Network 142 can comprise any suitable combination of wired and/or wireless networks, including but not limited to packet based networks, the Internet, analog networks, the PSTN, LAN, WAN, cell phone networks, WiFi networks, WiMax networks and/or any suitable combination thereof. Other suitable types of networks will also occur to those skilled in the art.

Remote computing device 130 maintains, for example in non-volatile memory 134, a remote media library 150 containing a listing of corresponding media files 152, which are also maintained at remote computing device 130, for example in non-volatile memory 134.

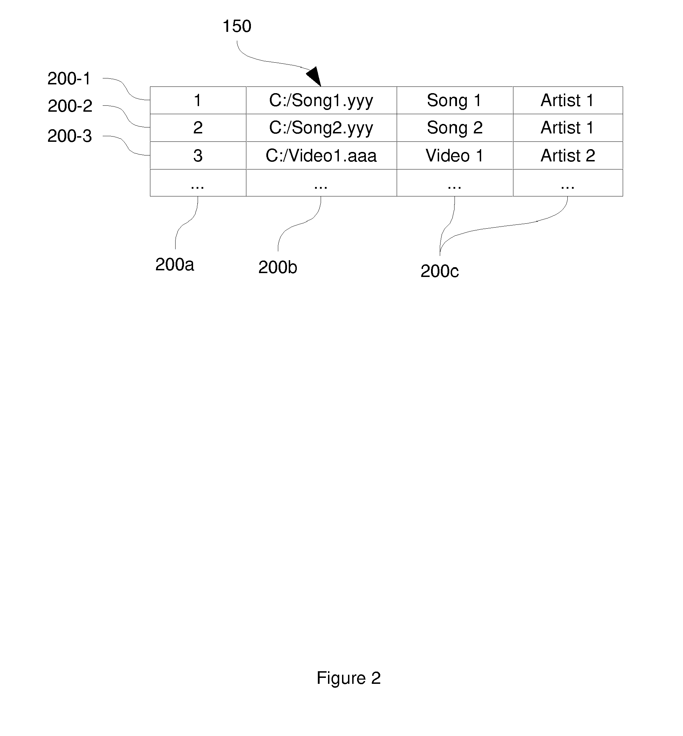

Referring now to Figure 2, an exemplary representation of remote media library 150 is provided. Although remote media library 150 is depicted in rows and columns, it will be apparent that any suitable format can be used, as will occur to those skilled in the art. In a present embodiment, remote media library 150 contains a plurality of remote library elements 200-1, 200-2, 200-3 and so on (generically referred to herein as "library elements 200"). Each remote library element 200 corresponds to one of the media files 152 and includes an index value 200a (e.g. "1"), a file path 200b (e.g. "C:/Song1.yyy") and metadata 200c, such as a title (e.g. "Song 1") and an artist name (e.g. "Artist 1"). It will be appreciated that while file extensions "yyy" and "aaa" are shown in Figure 2, media files 152 can include files of a variety of file types, leading to various file extensions in paths 200b. For example, audio files such as songs can be in MP3, WAV, FLAC, OGG formats and the like. Video files can be in MPG, MP4 formats and the like. Other suitable file formats will occur to those skilled in the art. It will now be apparent that many other types of metadata are also contemplated herein, such as album artwork, beats-per-minute statistics and the like.

It will be appreciated that the storage capacity of mobile electronic device 110 may in some instances be smaller than that of remote computing device 130, and mobile electronic device 110 may therefore be unable to maintain every one of media files 152 in memory. Referring back to Figure 1, mobile electronic device 110 can therefore maintain, for example in non-volatile memory 114, only a subset 154 of media files 152 maintained at remote computing device 130.

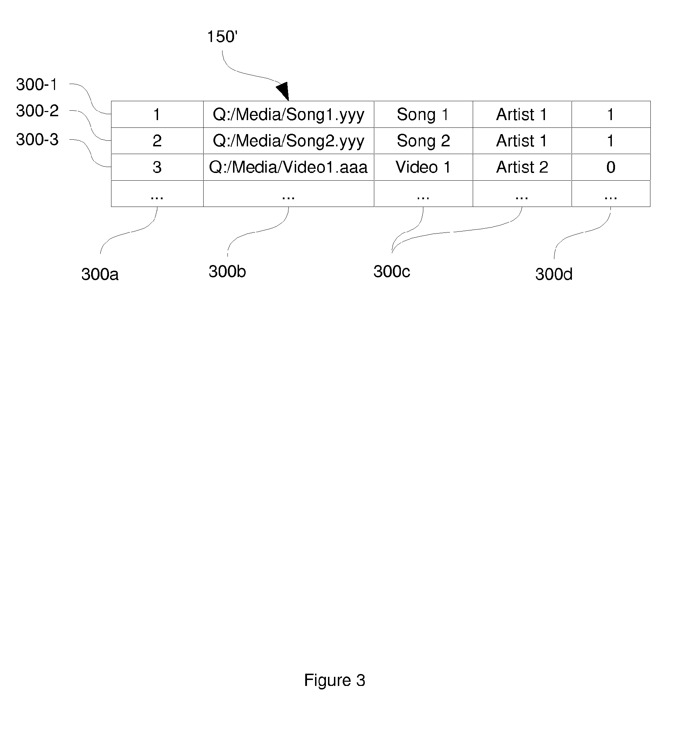

Mobile electronic device 110 also maintains, for example in non-volatile memory 114, a device media library 150'. Device media library 150', as shown in Figure 3, contains device library elements 300 for each of media files 152 including index values 300a, file paths 300b and metadata 300c. In addition, each device library element 300 also includes a presence indicator 300d for the corresponding media file, indicating whether or not the corresponding media file is stored on mobile electronic device 110 - that is, whether or not the corresponding media file is among the subset 154 of media files 152. For example, the file named "Video1.aaa" has a presence indicator 300d of "0" indicating that it is not stored on mobile electronic device 110. In other words, "Video1.aaa" is not among the subset 154 of media files 152, though it is one of media files 152. Thus, device media library 150' contains library elements for media files that are stored at both mobile electronic device 110 and remote computing device 130 (i.e. are part of subset 154) as well as for media files that are stored at remote computing device 130, but not at mobile electronic device 110.

It will now be apparent to those skilled in the art that device media library 150' and media files 154 may be synchronized by any suitable means with remote media library 150 and media files 152, respectively. Such synchronization may be carried out over link 140 or over network 142 via links 144 and 146.

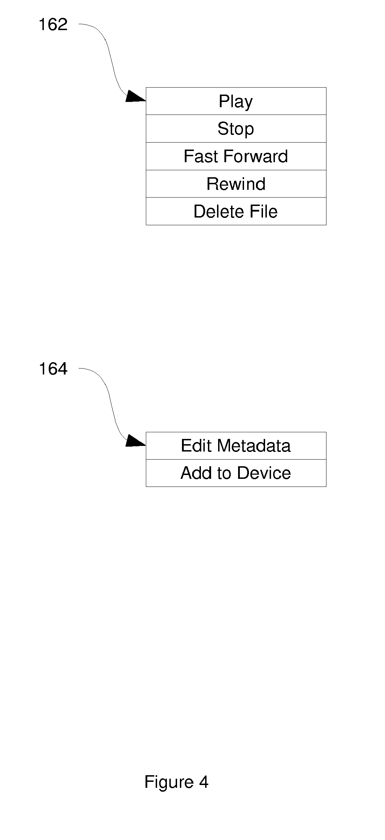

Returning to Figure 1, mobile electronic device 110 also comprises a media player application 160 (i.e., an application program executable by the mobile electronic device 110) and a first menu list 162, maintained, for example, in non-volatile memory 114. It will be appreciated that media player application 160 can also be maintained on any other suitable computer-readable medium, such as an optical disc, removable memory card, or USB drive. Referring now to Figure 4, first menu list 162 is depicted according to an exemplary embodiment. It will now be apparent that first menu list 162 comprises a list of options relating to the execution of media player application 160 on processor 112. For example, input data received at input device 124 indicative of a selection of the "Play" option causes media player application 160 executing on processor 112 to play a media file. It will be understood that the media file to be played can be selected by way of previous input data received at input device 124. The expression "input data" as used herein can refer to, for example, the depression of an input key and/or a touch screen, the scrolling of a track wheel, and/or any combination of the above. Additional types of input data will occur to those skilled in the art.

In general, media player application 160 comprises programming instructions executable by processor 112 for receiving input data from input device 124 and processing device media library 150' and subset 154 of media files 152 responsive to the received input data. Media player application 160, when executed by processor 112, also configures processor 112 to control display 120 to generate data representative of media player application 160 and first menu list 162. It will be understood that "generating" in the context of display 120 is equivalent to displaying. Thus, display 120 can be controlled to display a representation of media player application 160 and first menu list 162. Processor 112 makes appropriate use of volatile memory 116 during execution of media player application 160.

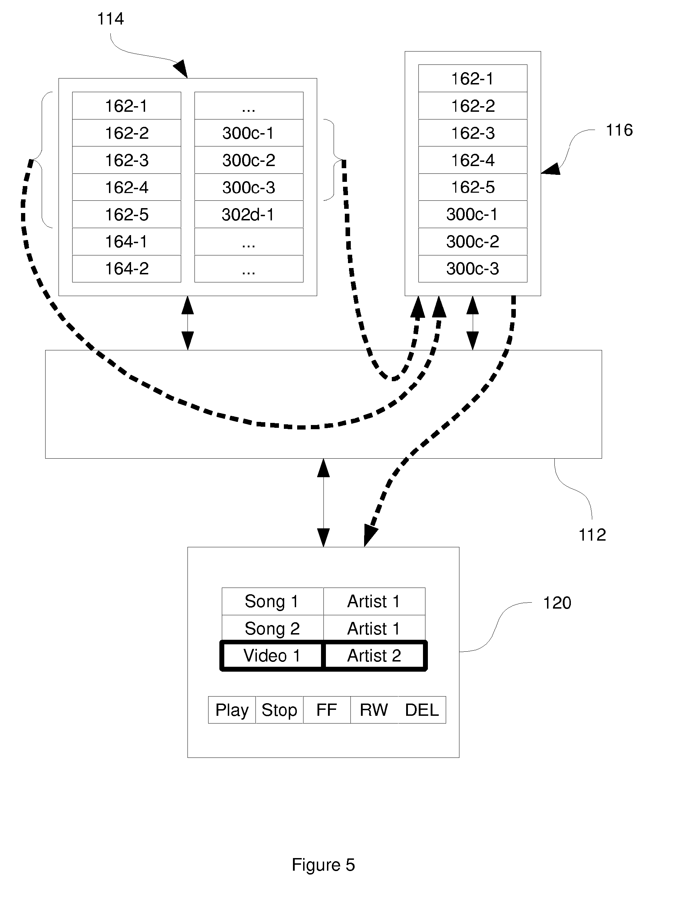

Figure 5 shows an exemplary generation of representative data on display 120. Processor 112, executing media player application 160, loads first menu list 162 and metadata 300c of device media library 150' from non-volatile memory 114 to volatile memory 116. The data in volatile memory 116 is then loaded into processor 112 and used to control display 120 as shown. Display 120 thus generates data representative of first menu list 162 and a portion of device media library 150' according to the instructions contained within media player application 160.

It will now be apparent that the options represented by the data in first menu list 162 are relevant only to subset 154 of media files 152. For those of media files 152 which are not among subset 154, and are therefore not stored on mobile electronic device 110, first menu list 162 is not used. Therefore, mobile electronic device 110 also comprises a second menu list 164, as shown in Figure 1, and media player application 160 also configures processor 112 to control display 120 to generate data representative of second menu list 164. Referring to Figure 4, second menu list 164 includes options relevant to media files for which device library elements 300 exist in device media library 150' but which are not among subset 154 of media files 152. For example, input received at input device 124 indicating selection of the "Edit Metadata" option can cause media player application 160 to await further input data for changing the metadata 304 for a previously selected entry in device media library 150'. It will now be apparent that processor 112 can also control display 120 to generate representative data providing a visual indication (not shown) of whether a given media file is stored on mobile electronic device 110.

First menu list 162 and second menu list 164 can each comprise a list of words (as shown in Figure 4), icons (e.g., the standard arrow for play, square for stop, etc), or a combination of words and icons. First menu list 162 and second menu list 164 can have distinct options (as shown in Figure 4) or, in an alternative embodiment, can have the same options (e.g., a super-list having all seven options shown in Figure 4) with some options greyed out. That is, first menu list 162 has the options "Edit Metadata" and "Add to Device" greyed out, while the second menu list 164 has the options "Play" etc greyed out. In still a further embodiment, first menu list 162 and second menu list 164 are replaced by first and second menus that are not in list format (e.g., an icon cluster).

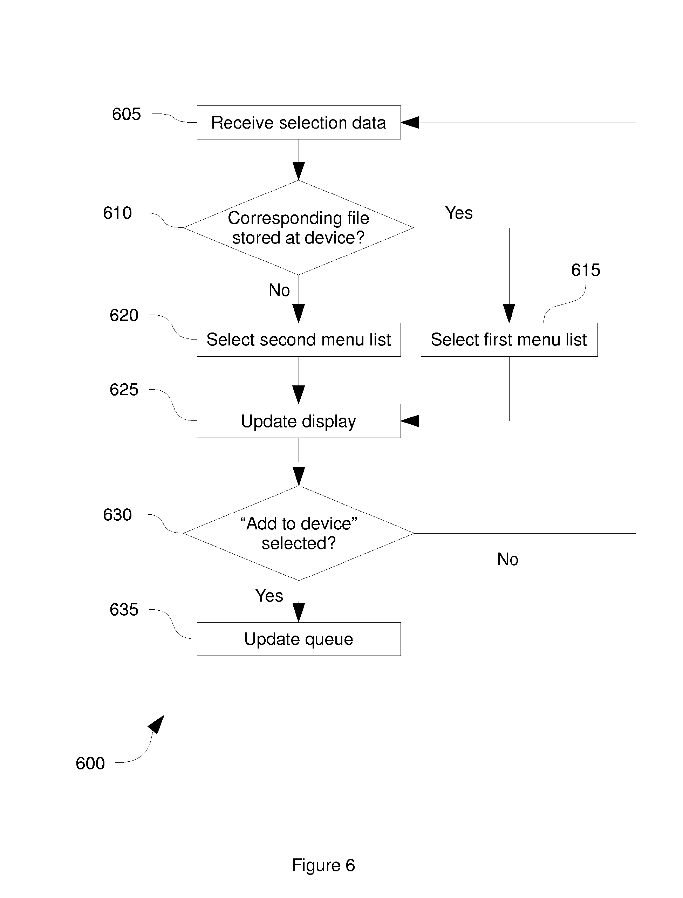

Referring now to Figure 6, a method of managing media files, generally indicated at 600, will be described in conjunction with its exemplary performance on mobile electronic device 110. It will be understood, however, that method 600 may also be performed on other suitable systems, as will occur to those skilled in the art.

Method 600 begins at block 605 with the receipt of selection data indicating selection of a device library element 300. Selection data can be received at input device 124 for selecting a given media file from representative data generated by display 120. For example, the bold outline in Figure 5 shows that selection data has been received indicating selection of the representative data "Video 1; Artist 2," on display 120 which corresponds to device library element 300-3.

Method 600 continues at block 610 with a determination of whether or not the media file corresponding to the device library element 300 selected at block 605 is stored on the mobile electronic device 110. In a present embodiment, media application 160 configures processor 112 to make the determination at block 610 by checking the contents of presence indicator 300d in device media library 150' for the device library element 300 corresponding to the selection data received at block 605. In this exemplary performance of method 600, the corresponding device library element, 300-3, contains a presence indicator of "0," meaning the corresponding media file is not stored on mobile electronic device 110.

If the determination at block 610 is affirmative, method 600 proceeds to block 615, where first menu list 162 is selected. However, if the determination at block 610 is negative, as in the present exemplary performance of method 600, method 600 proceeds to block 620, where second menu list 164 is selected.

Method 600 then proceeds to block 625. At block 625, the representative data on display 120 is updated based on the selected one of first menu list 162 and second menu list 164. In particular, processor 112 controls display 120 as shown in Figure 5 to generate representative data for either first menu list 162 or second menu list 164.

Following performance of block 625, method 600 proceeds to block 630. At block 630, a determination is made as to whether selection data has been received indicating selection of the future synchronization, i.e., "Add to device," option of second menu list 164. It will now be apparent to those skilled in the art that block 630 is relevant only when second menu list 164 is selected, at block 620. If the determination at block 630 is negative, method 600 can return to block 605 to wait for further selection data. It will be understood that method 600 can also wait at block 630 for a selection of "Add to device," for example until new selection data is received indicating selection of a different device library element 300 (at which point method 600 can return to block 605).

If the determination at block 630 is positive, method 600 proceeds to block 635. Referring briefly to Figure 1, mobile electronic device 110 also maintains, for example in non-volatile memory 114, a future synchronization queue 166. Future synchronization queue 166 contains a list of identifiers identifying one or more of media files 152 not among subset 154, which are to be synchronized to mobile electronic device 110 at the time of the next synchronization operation with remote computing device 130. For example, future synchronization queue 166 may be a list of index values 300a, which identify library elements 300 corresponding to media files. In another example, future synchronization queue 166 exists as part of (e.g., an additional column of) device media library 150' such that, for example, a "0" in the column indicates not queued for synchronization and a "1" in the column indicates queued for synchronization.

Returning now to Figure 6, at block 635 future synchronization queue 166 is updated to include, for example, the index value 300a of the selected device library element 300. In the present exemplary performance of method 600, representative data generated by display 120 has been selected indicating a selection of device library element 300-3, as discussed above with respect to Figure 5. Thus, at block 635 the value "3" - the index value at "row" 300-3, "column" 300a (also referred to as the index value 300a-3), as shown in Figure 3 - is added to future synchronization queue 166.

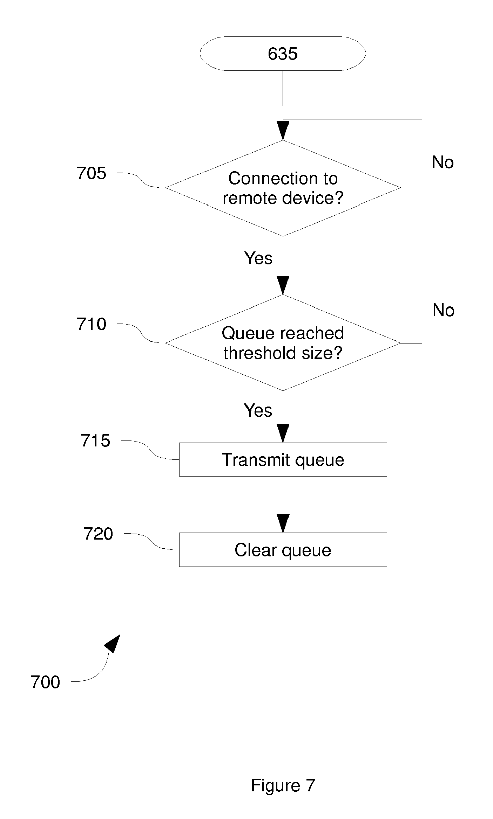

Referring now to Figure 7, a continuation of method 600, indicated generally at 700 is depicted. It will be understood that performance of method 700 need not necessarily follow performance of method 600, however. Method 700 begins at block 705. At block 705, a determination is made as to whether a connection (for example, via links 144, 146 and network 142) to remote computing device 130 is available. If the determination at block 705 is negative, method 700 can repeat the determination, as shown in Figure 7. Method 700 can also terminate (not shown), to be repeated following the next performance of method 600.

If the determination at block 705 is positive, method 700 proceeds to block 710. At block 710, a determination is made as to whether future synchronization queue 166 has reached a predetermined threshold size. It will now be apparent that the predetermined threshold size can be set and modified at mobile electronic device 110 and can represent a user preference for the amount queued media files to trigger a transfer (e.g., one, five, 10, etc). If the determination at block 710 is negative, method 700 can repeat the determination, as shown in Figure 7. Method 700 can also terminate (not shown), to be repeated following the next performance of method 600.

If the determination at block 710 is positive, method 700 proceeds to block 715. At block 715, future synchronization queue 166 is transmitted from mobile electronic device 110 to remote computing device 130. Block 715 can be carried out automatically, or upon receipt of input data at input device 124.

It will now be apparent that in other embodiments, block 705 can also make a determination as to the type of connection available. For example, if a connection via link 140 (such as USB) - which may have greater bandwidth and lower cost than a connection via network 142 - is detected, mobile electronic device 110 can initiate a synchronization operation in the usual manner, including receiving media files 152 from remote computing device 130 following transmission of future synchronization queue 166. In such instances, the synchronization operation can be carried out regardless of the determination at block 710 (i.e. synchronization can be initiated even if future synchronization queue 166 has not reached the threshold size).

Following successful transmission of future synchronization queue 166 at block 715, processor 112 can be configured to clear the contents of future synchronization queue 166 at block 720, thus making available additional storage in one or both of non-volatile memory unit 114 and volatile memory unit 116.

It will now be apparent that remote computing device 130 can store, for example in non-volatile memory 134, a remote future synchronization log 168 comprising each of the future synchronization queues 166 received from mobile electronic device 110. When a synchronization operation is initiated in the usual manner, remote computing device 130 can then make use of remote future synchronization log 168 to determine which of media files 152 should be transmitted to mobile electronic device 110.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A method of managing media files on a mobile electronic device (110) comprising a processor (112), a display (120), a memory (114, 116) and an input device (124), the method comprising:
storing in the memory (114, 116) a plurality of device library elements (300) each associated with one of a plurality of corresponding media files (152), and storing in the memory (114, 116) a subset (154) of the corresponding media files;
storing in the memory (114, 116) a first menu (162) and a second menu (164);
receiving (605) a selection of one of the library elements (300);
determining (610) if the media file corresponding to the selected library element (300) is stored in the memory (114, 116);
if the corresponding file is stored in the memory (114, 116), selecting (615) the first menu (162); and if the corresponding file is not stored in the memory, selecting (620) the second menu (164); and
controlling (625) the display (120) to generate representative data for the selected menu.

2. The method of claim 1, further comprising:
storing in the memory a future synchronization queue (166) containing at least an identifier (300a) of a library element corresponding to a media file;
wherein the second menu includes a future synchronization option for adding an identifier to the future synchronization queue.

3. The method of claim 2, further comprising:
receiving (630) a selection of the future synchronization option;
updating (635) the future synchronization queue with the identifier of the selected library element (300).

4. The method of claim 2 or claim 3, further comprising:
determining (705) if a connection (140, 142, 146) to a remote computing device (130) is available;
if a connection (140, 142, 146) is available, transmitting (715) the future synchronization queue (166) to the remote computing device (130).

5. The method of claim 4, further comprising:
prior to transmitting the future synchronization queue, making at least one additional determination; and,
transmitting (715) the future synchronization queue according to a determination of whether a connection to a remote computing device is available, and according to the at least one additional determination.

6. The method of claim 5, wherein the at least one additional determination comprises at least one of determining (710) if the future synchronization queue (166) has reached a threshold size, and determining a connection type to the remote computing device (130).

7. The method of any one of claims 1 to 6, wherein the first menu comprises a first menu list and the second menu comprises a second menu list, and wherein the first menu comprises a play option for playing a media file.

8. A mobile electronic device (110), comprising:
a display (120);
a memory (114, 116) storing a plurality of device library elements (300) each associated with one of a plurality of corresponding media files (152); the memory (114, 116) further storing a subset (154) of the corresponding media files (152); the memory further storing first (162) and second (164) menus;
an input device (124) configured to receive input data selecting one of the library elements (300);
a processor (112), interconnected with the display (120), memory (114, 116) and input device (124), configured to determine if the media file corresponding to the selected library element (300) is stored in the memory (114, 116);
the processor (112) further configured to select the first menu (162) when the corresponding file is stored in the memory (114, 116); the processor (112) further configured to select the second menu (164) when the corresponding file is not stored in the memory (114, 116);
the processor further configured to control the display (120) to generate representative data for the selected menu.

9. The mobile electronic device (110) of claim 8, further comprising a future synchronization queue (166) stored in the memory (114, 116) containing identifiers (300a) of library elements (300); wherein the second menu list (164) includes a future synchronization option.

10. The mobile electronic device (110) of claim 9, the processor (112) being further configured to update the future synchronization queue (166) with the identifier (300a) of the selected library element (300) upon receiving at the input device (124) a selection of the future synchronization option.

11. The mobile electronic device (110) of claim 9 or claim 10, further comprising:
a communications interface (118) configured to communicate with a remote computing device (130);
the processor (112) being further configured to determine if a connection (140, 142, 146) to a remote computing device (130) is available; the processor (112) being further configured to transmit the future synchronization queue (166) to the remote computing device and to clear the future synchronization queue if a connection is available.

12. The mobile electronic device (110) of claim 11, the processor being further configured to make at least one additional determination prior to transmitting the future synchronization queue (166); the processor being further configured to transmit the future synchronization queue (166) according to the determination of whether a connection to a remote computing device is available, and according to the at least one additional determination.

13. The mobile electronic device (110) of claim 12, wherein the at least one additional determination comprises at least one of a determination of whether the future synchronization queue (166) has reached a threshold size, and a determination of a connection type to the remote computing device.

14. The mobile electronic device of any one of claims 8 to 13, wherein the first menu comprises a first menu list and the second menu comprises a second menu list, and wherein the first menu comprises a play option for playing a media file.

15. A computer readable medium storing an application program executable on a mobile electronic device, the computer readable medium comprising programming instructions which, when executed on a mobile electronic device, will cause the device to carry out the method of any one of claims 1-7.
